# EUROPEAN PATENT SPECIFICATION

(11) **EP 1 387 615 B1**
(45) Date of publication and mention of the grant of the patent: **27.02.2008**
(21) Application number: 02716878.0
(22) Date of filing: 26.04.2002
(51) Int. Cl.: A21B 3/15, D21H 27/02

(54) **BAKING PAPER**
BACKPAPIER
PAPIER DE CUISSON

(30) Priority: 17.05.2001 FI 20011042
(43) Date of publication of application: 11.02.2004
(73) Proprietor: Metsä Tissue Oyj, 00210 Helsinki (FI); Cofresco Frischhalteprodukte GmbH & Co. KG, 32427 Minden (DE)
(72) Inventor: TALJA, Martti, FIN-35800 Mänttä (FI); MÖRÖ, Raija, FIN-35700 Vilppula (FI)
(74) Representative: Pursiainen, Timo Pekka
(86) International application number: PCT/FI2002/000356
(87) International publication number: WO 2002/091835

(56) References cited:
- WO-A-96/15321
- WO-A1-97/48551
- DE-U1- 29 909 559
- GB-A- 726 440
- GB-A- 2 220 346
- US-A- 5 351 608

## Description

The present invention relates to a baking paper.

Publication EP 0 664 082 discloses a baking paper with an absorbent layer on one side. The absorbent layer may be crêped to provide the paper with a larger absorbent surface area.

Publication GB 2 220 346 discloses a grease-proof baking sheet which is silicone coated on both surfaces and which is marked with areas of fixed size to make it easy to place bakery products on the paper. The markings can be made by embossing.

Known baking papers involve the problem that in spite of the surface intended to be smooth and non-sticky, the product made on it adheres to the surface. For example, when baking certain sheets of dough, it may be necessary to apply grease on the paper before the use, to make the ready baking product detach from the paper.

The baking paper according to the invention is characterized in that its surface is uniformly embossed. The term "uniformly embossed" refers to the fact that the embossing covers substantially the whole surface of the paper and the distance between single embossing patterns from each other is not more than 5 mm.

Products, such as bakery products, made on the surface of the baking paper according to the invention, are easily detached from the baking paper. Thanks to the embossing, the contact area between the product to be made and the baking paper becomes smaller than on an unembossed paper.

The raw material for the baking paper according to the invention is sulphite or sulphate pulp. The pulp can be unbleached or bleached. The raw material is processed to a tight, grease-proof paper. The grease-proofness can be achieved by treating paper made of pure pulp with sulphuric acid, wherein the fibres swell and constitute a homogeneous, grease-proof film. In this way, so-called parchment paper is produced.

Another way to manufacture grease-proof paper is to grind paper pulp finely so that it is possible to produce dense, substantially unporous paper. The density of the paper can be improved by supercalendering. The paper can be finished by surface sizing, which may comprise starch, alginates or carboxyl methyl cellulose (CMC). The surface sizing will fill any remaining pores and/or make the surface of the paper chemically grease-proof.

The grease-proof paper can be processed to so-called glassine in a glazing calender, or this step can be omitted. The grease-proof paper can be siliconated either by off-line or on-line processing, or it can be left without siliconizing. The siliconizing can be performed on only one side or on both sides of the paper.

Next, the baking paper according to the invention is embossed. The embossing is performed by calendering the grease-proof paper with particular calender rolls with an embossed surface. In the calender, one or both of the rolls forming a nip can be embossed, or the paper may be passed through several nips, wherein at least one of the rolls forming the nip is embossed. The surface material of the rolls in the calender can be hard or resilient; for example, the surface material of the roll can be metal, plastic or paper. Normally, the embossing is performed in such a way that in the embossing nip, one of the counter-surfaces forming the nip is a hard embossed roll and the other is a resilient roll, wherein the embossments in the metal roll can compress the surface material of the counter roll and simultaneously emboss the paper being run through the nip. It is also possible that one of the counter-surfaces of the nip is formed by a resilient belt which is supported in a suitable way to produce the necessary nip pressure.

The embossing patterns can be, for example, circular embossing patterns or embossing patterns resembling a spider web or grains in leather. The embossing pattern may protrude from the plane of the paper on only one side of the paper, or the embossing can be arranged in such a way that embossing patterns protrude from the plane of the paper on both sides of the paper. If the paper is siliconized on only one side of the paper, the embossing patterns protrude from the plane of the paper on the siliconized side of the paper. Preferably, the embossing patterns are dense, point-like patterns on the surface of the paper.

As the finished product, the embossed grease-proof baking paper can be made in the form of a roll, sheets or, for example, disposable cake cups. This paper can be used in households as well as in food industry, for example in bakeries.

In the following, the invention will be described in more detail by means of drawings, in which
- Fig. 1: shows a possible structure for an embossing nip as a cross-section of rolls forming the nip, and
- Fig. 2: shows the cross-section of paper processed in the nip of Fig. 1.

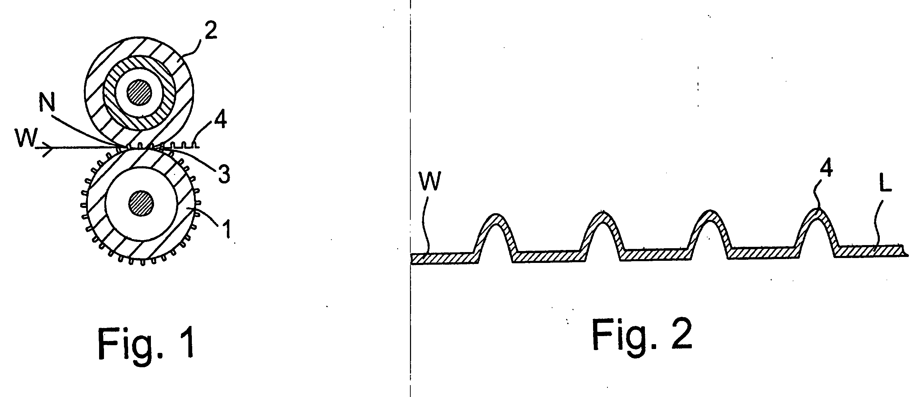

The dimensions in Figs. 1 and 2 are not real. The figures are shown in these dimensions for the sake of clarity.

Figure 1 shows a calender nip N, in which the counter-surfaces forming the nip N are a hard-faced roll 1 and a resilient-faced roll 2. The hard-faced roll 1 can be a metal roll, and the resilient-faced roll 2 can be a polymer-coated roll. The surface of the hard-faced roll 1 is provided with bulges 3 protruding in the direction of the radius of the roll and intended to form the embossing pattern. When the paper W is being embossed, the resilient surface of the roll 2 is compressed and the bulges 3 penetrate the surface of the resilient surface. In this way, an embossing pattern 4 is formed on the surface of the paper W.

Figure 2 shows the cross-section of paper processed in the nip of Fig. 1. Embossments 4 bulge from the plane L of the paper. The shape of the embossment 4 is curved because the paper W is stretched outside the edge of the bulge 3 in the nip N.

The invention is not restricted to the description above, but it may vary within the scope of the claims. The main idea in the present invention is that when the baking paper is embossed, the product to be made on its surface will detach easily.

## Claims

1. A baking paper comprising grease-proof paper, **characterized in that** its surface is uniformly embossed.

2. The paper according to claim 1, **characterized in that** it is siliconized on at least one side.

3. The paper according to claim 2, **characterized in that** the paper is treated with sulphuric acid to be grease-proof.

4. The paper according to claim 2, **characterized in that** the paper is a supercalendered paper consisting of finely ground pulp.

5. The paper according to claim 4, **characterized in that** the paper is a glazed paper.

6. The paper according to any of the preceding claims, **characterized in that** it is made of sulphate or sulphite pulp.

## Patentansprüche

1. Backpapier umfassend fettdichtes Papier, **dadurch gekennzeichnet, dass** seine Oberfläche gleichmäßig geprägt ist.

2. Papier nach Anspruch 1, **dadurch gekennzeichnet, dass** es an mindestens einer Seite silikonbeschichtet ist.

3. Papier nach Anspruch 2, **dadurch gekennzeichnet, dass** das Papier mit Schwefelsäure behandelt ist, um fettdicht zu sein.

4. Papier nach Anspruch 2, **dadurch gekennzeichnet, dass** das Papier ein hochsatiniertes Papier ist, das aus fein gemahlenem Zellstoff besteht.

5. Papier nach Anspruch 4, **dadurch gekennzeichnet, dass** das Papier ein Glanzpapier ist.

6. Papier nach irgendeinem der vorangehenden Ansprüche, **dadurch gekennzeichnet, dass** es aus Sulfat- oder Sulfitzellstoff besteht.

## Revendications

1. Papier de cuisson comprenant un papier étanche aux graisses, **caractérisé en ce que** sa surface est uniformément gaufrée.

2. Papier selon la revendication 1, **caractérisé en ce qu'**il est siliconé sur au moins un côté.

3. Papier selon la revendication 2, **caractérisé en ce que** le papier est traité avec de l'acide sulfurique pour être étanche aux graisses.

4. Papier selon la revendication 2, **caractérisé en ce que** le papier est un papier surcalandré consistant en une pâte finement broyée.

5. Papier selon la revendication 4, **caractérisé en ce que** le papier est un papier glacé.

6. Papier selon l'une quelconque des revendications précédentes, **caractérisé en ce qu'**il est constitué d'une pâte au sulfate ou au sulfite.
